# FASCICULE DE BREVET EUROPEEN

(11) **EP 1 026 420 B1**
(45) Date de publication et mention de la délivrance du brevet: **06.08.2003**
(21) Numéro de dépôt: 00400277.0
(22) Date de dépôt: 02.02.2000
(51) Int. Cl.: F16F 1/373, F16F 1/38

(54) **Support antivibratoire et son procédé de fabrication**
Schwingungsdämpfendes Lager und Verfahren zur Herstellung
Damping support and process for manufacturing the same

(30) Priorité: 05.02.1999 FR 9901364
(43) Date de publication de la demande: 09.08.2000
(73) Titulaire: HUTCHINSON, 75008 Paris (FR)
(72) Inventeur: Chenais, Gilles, 28200 Marboue (FR); Lefèbvre, Christophe, 28200 Civry (FR); Larmande, Franck, 28200 Châteaudun (FR); Couchoux, David, 28200 La Chapelle du Noyer (FR)
(74) Mandataire: Burbaud, Eric

(56) Documents cités:
- GB-A- 2 062 804
- US-A- 3 479 081
- US-A- 5 074 535
- US-A- 5 127 698
- US-A- 5 310 276

## Description

L'invention concerne les supports antivibratoires et leurs procédés de fabrication.

Plus particulièrement, l'invention concerne un support antivibratoire destiné à être interposé entre des premier et deuxième éléments rigides pour amortir des vibrations entre ces deux éléments, selon au moins une direction de vibration, ce support comportant :
- deux armatures rigides respectivement intérieure et extérieure, adaptées pour être reliées respectivement avec les premier et deuxième éléments rigides à réunir, l'armature extérieure présentant une forme annulaire sensiblement centrée sur un axe parallèle à ladite direction de vibration et entourant l'armature intérieure ;
- un corps en élastomère reliant entre elles les deux armatures rigides et comportant un premier groupe de bossages qui comprend au moins un bossage, ledit bossage s'étendant dans un premier sens selon la direction de vibration à partir de l'armature extérieure, ce bossage étant adapté pour buter contre une contrebutée solidaire du premier élément rigide afin de limiter le déplacement de l'armature intérieure dans la direction de vibration selon un deuxième sens opposé audit premier sens ;
- et un élément d'interconnexion rigide comportant un rebord annulaire intérieur qui délimite un orifice traversant dans lequel l'armature extérieure est engagée, l'armature extérieure étant placée en appui contre ledit rebord annulaire dans le premier sens de la direction de vibration, le rebord annulaire présentant une première face axiale orientée dans le premier sens et ledit élément d'interconnexion comportant des moyens de liaison destinés à être fixés au deuxième élément rigide.

On connaît des supports antivibratoires de ce type, dans lesquels les premier et deuxième éléments rigides sont constitués respectivement par un châssis ou caisse de véhicule et un moteur.

L'armature extérieure de ces supports est en général reliée à l'élément d'interconnexion par des boulons qui passent respectivement dans des trous formés dans le bord périphérique de l'armature extérieure et le rebord annulaire de l'élément d'interconnexion.

L'inconvénient de ce mode de liaison réside dans le fait que les boulons sont sollicités en traction lorsque au moins un bossage du premier groupe vient buter contre le moteur. A cet effet, il est donc nécessaire de prévoir, d'une part, une armature extérieure suffisamment épaisse, et, d'autre part, des boulons ayant une taille suffisamment grande, afin d'empêcher l'armature extérieure de se désolidariser, par arrachement, de l'élément d'interconnexion.

Il en résulte un poids assez élevé et un prix de revient relativement important des supports antivibratoires de l'art antérieur.

La présente invention a notamment pour but de remédier à cet inconvénient.

A cet effet, l'armature extérieure comporte une partie centrale qui est en appui contre ledit rebord annulaire dans au moins une direction sensiblement radiale, et au moins une patte qui est pliée vers l'extérieur par rapport à ladite partie centrale de l'armature extérieure et qui est solidaire dudit bossage, ladite patte pliée et ledit bossage s'étendant en regard de ladite première face axiale du rebord annulaire, et au moins ladite patte étant en appui contre ladite première face axiale pour solidariser rigidement l'armature extérieure avec l'élément d'interconnexion.

Grâce à ces dispositions, on évite l'emploi de boulons ou autres moyens de fixation lourds et coûteux entre l'armature extérieure et l'élément d'interconnexion.

Cet avantage est obtenu sans diminution de la résistance mécanique du support antivibratoire, puisque la ou les pattes pliées de l'armature extérieure sont très peu sollicitées. En particulier, lorsque le bossage du corps en élastomère bute contre la contrebutée du premier élément rigide, ledit bossage est comprimé entre ladite contrebutée et la première face axiale du rebord annulaire de l'élément d'interconnexion, sans solliciter aucunement lesdites pattes pliées.

De ce fait, l'armature extérieure peut également être moins épaisse, donc moins lourde et moins coûteuse que dans l'art antérieur, puisque cette armature extérieure est très peu sollicitée.

Dans des modes de réalisation préférés du support antivibratoire selon l'invention, on peut éventuellement avoir recours en outre à l'une et/ou à l'autre des dispositions suivantes :
- chaque bossage du premier groupe est solidarisé avec la patte correspondante de l'armature extérieure par une paroi mince en élastomère moulée d'une seule pièce avec le corps en élastomère, ladite paroi mince étant solidarisée en partie avec la patte et avec le bossage correspondants ;
- chaque bossage du premier groupe se présente sous la forme d'une languette épaisse en élastomère qui est reliée au reste du corps en élastomère par une partie amincie flexible, de façon que ladite languette puisse pivoter dans la direction radiale, et la paroi mince en élastomère est reliée à ladite languette en au moins un point éloigné de ladite partie amincie ;
- chaque bossage du premier groupe comporte des moyens de clipsage propres à coopérer avec des moyens de clipsage complémentaires solidaires du rebord annulaire de l'élément d'interconnexion pour maintenir le bossage sous ledit rebord annulaire ;
- le rebord annulaire de l'élément d'interconnexion présente une deuxième face axiale qui est opposée à la première face axiale et qui est recouverte par l'armature extérieure, l'armature extérieure étant en appui direct et rigide contre ladite deuxième face et chaque patte pliée de l'armature extérieure étant en appui direct et rigide contre la première face axiale du rebord annulaire de l'élément d'interconnexion, tandis que la partie centrale de l'armature extérieure est en contact périphérique direct et rigide contre ledit rebord dans la direction radiale ;
- l'armature extérieure est constituée par une tôle pliée et découpée et est munie, à une première extrémité opposée au premier élément rigide, d'un bord périphérique externe, et, à une deuxième extrémité opposée à ladite première extrémité, d'au moins deux pattes qui sont venues de matière avec ladite armature extérieure, qui sont sensiblement diamétralement opposées, et qui sont respectivement solidaires de deux bossages par des moyens de liaison, ces bossages étant eux même diamétralement opposés par rapport à l'armature extérieure ;
- le corps en élastomère comporte un deuxième groupe de bossages comprenant au moins un bossage, chaque bossage du deuxième groupe s'étendant dans ledit premier sens de la direction de vibration à partir de l'armature intérieure, ce bossage du deuxième groupe étant adapté pour buter contre l'armature extérieure afin de limiter le déplacement de l'armature intérieure dans ledit premier sens ;
- le corps en élastomère comporte un troisième groupe de bossages comprenant au moins un bossage, chaque bossage du troisième groupe s'étendant dans un premier sens selon une direction sensiblement radiale depuis l'armature intérieure, l'élément d'interconnexion présentant une contrebutée qui est située au niveau dudit bossage du troisième groupe et qui est adaptée pour coopérer avec ce dernier, afin de limiter le déplacement latéral de l'armature intérieure vers ledit élément d'interconnexion.

Pour ce qui est du procédé de fabrication des supports antivibratoires du genre en question, il comprend essentiellement les étapes consistant à :
a) mouler le corps en élastomère entre l'armature intérieure et une ébauche d'armature extérieure dont chaque patte s'étend sensiblement axialement dans le premier sens de la direction de vibration, ledit bossage formant alors une languette flexible qui est solidaire de ladite patte et ledit corps en élastomère étant alors solidaire de l'armature intérieure et de l'ébauche d'armature extérieure ;
b) emboîter l'ébauche d'armature extérieure dans l'orifice de l'élément d'interconnexion de façon à ce que la patte de l'ébauche d'armature extérieure et ledit bossage soient situés au-delà du rebord annulaire de l'élément d'interconnexion dans le premier sens de la direction de vibration ;
c) et replier ladite patte de l'ébauche d'armature extérieure contre la première face axiale du rebord annulaire de l'élément d'interconnexion en formant ainsi l'armature extérieure, en entraînant simultanément le bossage pour le positionner sous le rebord annulaire de l'élément d'interconnexion.

Dans ce qui suit, l'on va décrire un mode de réalisation préféré de l'invention en se référant aux dessins ci-annexés d'une manière bien entendu non limitative.
- la figure 1 est une vue en perspective partielle du support antivibratoire avant pliage des pattes de l'armature extérieure sous le rebord intérieur de l'élément d'interconnexion, l'élément d'interconnexion étant représenté partiellement en coupe verticale ;
- la figure 2 est une vue de détail de la figure 1 représentant les moyens de liaison qui relient une patte de l'armature extérieure au bossage en élastomère correspondant ;
- la figure 3 est une vue en coupe verticale du support antivibratoire de la figure 1 ;
- la figure 4 est une vue en coupe verticale du support antivibratoire de la figure 1, après pliage des pattes de l'armature extérieure sous le rebord intérieur de l'élément d'interconnexion.

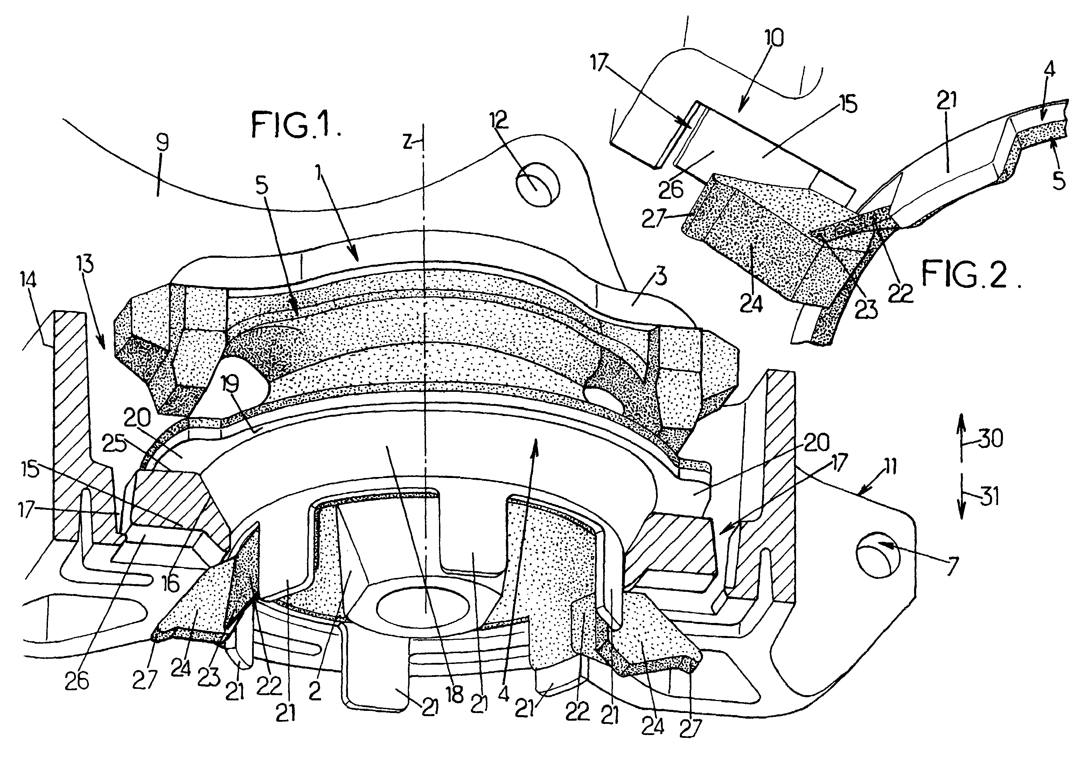

En référence aux figures 1 à 4, le support antivibratoire selon l'invention comprend :
- une armature métallique intérieure tubulaire 1 de révolution autour d'un axe Z pouvant être notamment vertical, laquelle armature présente un tube vertical 2 de section circulaire et un bord externe 3 formé à la périphérie supérieure du tube 2,
- une armature métallique extérieure annulaire 4 de section circulaire, elle-même de révolution autour de l'axe Z, qui entoure l'armature 1 et qui, pour l'état de repos du support, est coaxiale à cette armature,
- et un corps en élastomère 5 reliant l'une à l'autre les deux armatures 1 et 4, lequel corps est surmoulé et adhérisé, par exemple par vulcanisation, sur pratiquement la totalité de la face externe de l'armature intérieure 1 et la totalité de la face interne de l'armature extérieure 4.

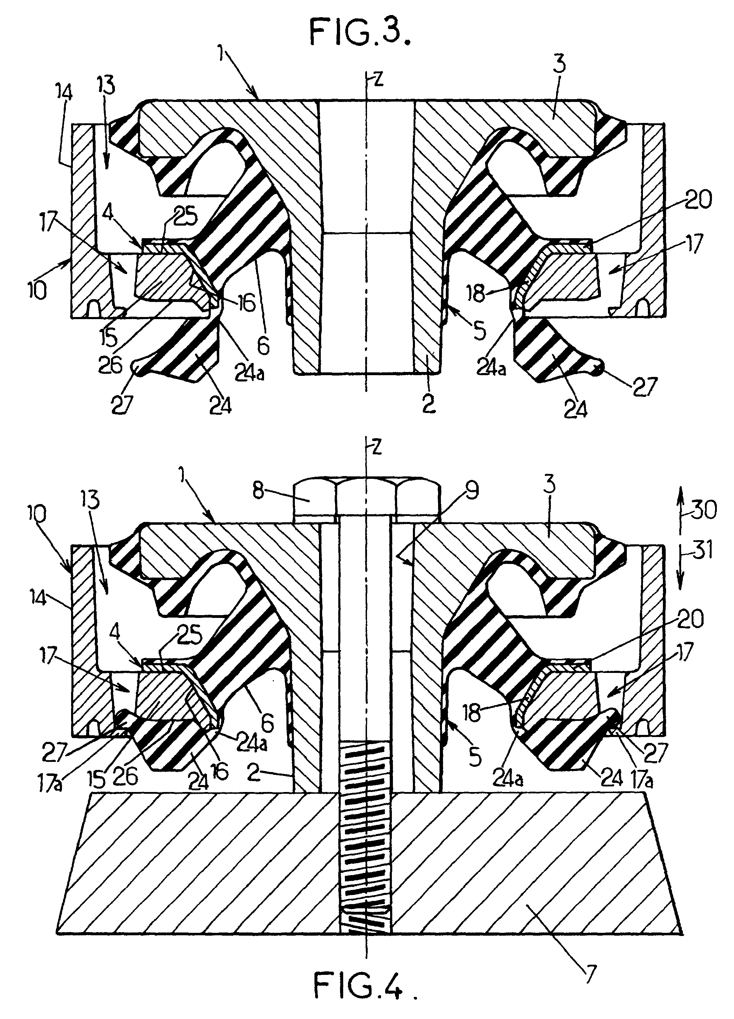

Comme on peut mieux le voir sur les figures 3 et 4, ce corps en élastomère 5 comporte une paroi épaisse tronconique 6 qui diverge vers le bas et vers l'armature extérieure 4 à partir de l'armature intérieure 1.

En référence à la figure 4, l'armature intérieure 1 est par exemple destinée à être solidarisée, par son extrémité opposée au bord périphérique 3, avec un moteur 7 de véhicule, par exemple au moyen d'une vis 8 qui traverse un trou axial 9 formé à travers le tube 2 de l'armature intérieure 1.

L'armature extérieure 4 est alors destinée à être solidarisée avec le châssis (non représenté) dudit véhicule par l'intermédiaire d'un élément d'interconnexion, tel que par exemple une console 10 pouvant être notamment moulée en alliage léger.

En référence à la figure 1, cette console comporte une partie 11 qui se présente sous la forme d'une plaque sensiblement verticale et qui est percée de plusieurs trous 12 (dont deux seulement sont représentés), dans lesquels passent respectivement des vis (non représentées) pour la fixation de la console 10 sur ledit châssis.

Comme on peut le voir en particulier sur les figures 1, 3 et 4, cette console comporte également un orifice traversant 13 qui présente une paroi sensiblement cylindrique 14, qui est de révolution autour de l'axe Z, et dans lequel est reçu le support antivibratoire. Ledit orifice a une section sensiblement circulaire et est pourvu d'un rebord périphérique interne 15 propre à coopérer avec l'armature extérieure 4, ledit rebord étant sensiblement perpendiculaire à la paroi 14 de l'orifice 13. Le rebord 15 comporte en outre une face interne tronconique 16 et deux encoches 17 diamétralement opposées dont l'utilité sera vue plus loin. Plus précisément, lesdites encoches 17 sont formées dans la région inférieure du rebord 15, au voisinage de la paroi 14 de l'orifice 13, et s'étendent sensiblement le long de l'axe Z.

En référence à nouveau à l'ensemble des figures, l'armature extérieure 4 se présente sous la forme d'un corps monobloc réalisé par emboutissage et découpage d'une plaque de tôle. Ce corps se compose d'une partie principale 18 qui présente une section de préférence tronconique, la face externe de la partie 18 étant complémentaire de la face interne 16 du rebord 15 de l'orifice 13. Ladite partie tronconique 18 est munie, à son extrémité supérieure, d'un bord périphérique externe 19 sensiblement horizontal qui comporte deux prolongements 20 diamétralement opposés par rapport à la partie tronconique 18, et, à son extrémité inférieure, d'une succession de pattes 21, qui sont par exemple au nombre de six et qui sont régulièrement espacées autour de la partie tronconique 18.

Ces pattes, comme cela est représenté sur la figure 1, sont orientées initialement vers le bas sensiblement le long de l'axe Z, c'est à dire au moment où le support antivibratoire est introduit et positionné dans l'orifice 13, sans être encore solidarisé avec la console 10.

En référence plus particulièrement aux figures 1 et 2, deux des pattes 21 semi-périphériques sont agencées sensiblement en correspondance avec les prolongements 20 du bord périphérique externe 19, en étant éventuellement décalées respectivement par rapport à ces derniers d'une faible valeur angulaire. Chacune de ces deux pattes est solidarisée, pratiquement sur la totalité de sa face interne, avec une mince paroi 22 en élastomère qui est venue de matière avec le corps en élastomère 5. Lesdites parois 22 s'étendent sensiblement le long de la périphérie de la partie tronconique 18, respectivement en direction des prolongements 20 du bord 19, et comportent chacune une extrémité libre 23 qui est venue de matière avec un bossage 24 correspondant.

Les bossages 24 sont des languettes épaisses en élastomère qui sont venues de matière avec le corps en élastomère et qui sont reliées à ce corps chacune par une partie amincie 24a flexible, l'extrémité libre 23 de la paroi mince 22 correspondante étant écartée de cette partie amincie 24a.

Ces bossages 24 sont situés respectivement à peu près en dessous des prolongements 20 du bord 19 de l'armature extérieure 4.

En référence à nouveau à l'ensemble des figures 1 à 4, le support antivibratoire est introduit et positionné dans l'orifice 13 de façon à ce que, d'une part, la face externe de la partie tronconique 18 du corps de l'armature extérieure 4 vienne en appui, dans une direction sensiblement radiale, contre la face interne complémentaire 16 du rebord périphérique 15, et que, d'autre part, le bord 19 de l'armature extérieure 4 repose, dans une direction sensiblement verticale, sur une face complémentaire 25 du rebord périphérique 15 qui est adjacente à la face 16. Dans cette position, les pattes 21 et les deux bossages 24 s'étendent vers le bas, jusqu'au-delà du rebord 15 de l'orifice 13, le support antivibratoire étant orienté de façon à ce que les bossages 24 soient situés respectivement en correspondance avec des encoches 17 du rebord 15.

Les pattes 21 sont ensuite repliées vers l'extérieur de la partie tronconique 18, dans une direction sensiblement radiale, de manière à ce que les pattes 21 s'appuient directement contre la face inférieure 26 du rebord 15.

Les parois en élastomère 22, qui sont solidaires respectivement de deux des pattes 21, sont également repliées sous le rebord 15 en entraînant avec elles les bossages 24, chaque bossage 24 venant alors se clipser respectivement dans l'encoche 17 qui lui est associée. A cet effet, les bossages 24 présentent chacun un bec 27 conformé pour venir s'engager au-dessus d'un rebord intérieur 17a de l'encoche 17 qui lui est associée.

Dans cette dernière position, les bossages 24 sont adaptés pour buter contre la partie supérieure 7a du moteur 7 (ou contre une autre contrebutée solidaire du moteur 7), et permettent ainsi de limiter en particulier le déplacement de l'armature intérieure 1 vers le haut, c'est-à-dire dans un premier sens 30 de la direction de vibration Z.

Dans l'exemple représenté, le corps en élastomère 5 comporte en outre deux autres bossages 28 qui sont diamétralement opposés par rapport à l'axe Z, et qui s'étendent respectivement, à partir du bord périphérique supérieur 3 de l'armature intérieure 1, vers les prolongements 20 du bord 19 de l'armature extérieure 4, sensiblement le long de l'axe Z. Ces bossages 28 sont adaptés pour buter respectivement contre lesdits prolongements 20, afin de limiter en particulier le déplacement de l'armature intérieure 1 vers le bas, c'est-à-dire dans un deuxième sens 31 de la direction de vibration Z.

De plus, le corps en élastomère 5 comporte encore deux autres bossages 29 qui sont diamétralement opposés par rapport au bord périphérique supérieur 3 de l'armature intérieure 1 et qui s'étendent, respectivement à partir des bossages 28, dans une direction sensiblement radiale, vers la paroi 14 de l'orifice 13. Ces bossages 29 sont adaptés pour buter respectivement contre ladite paroi, afin de limiter en particulier le déplacement latéral de l'armature intérieure 1 vers la console 10.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Support antivibratoire destiné à être interposé entre des premier et deuxième éléments rigides pour amortir des vibrations entre ces deux éléments, selon au moins une direction de vibration (Z), ce support comportant :
- deux armatures rigides respectivement intérieure (1) et extérieure (4), adaptées pour être reliées respectivement avec les premier et deuxième éléments rigides à réunir, l'armature extérieure présentant une forme annulaire sensiblement centrée sur un axe parallèle à ladite direction de vibration (Z) et entourant l'armature intérieure (1) ;
- un corps en élastomère (5) reliant entre elles les deux armatures rigides et comportant un premier groupe de bossages qui comprend au moins un bossage (24), ledit bossage s'étendant dans un premier sens (31) selon la direction de vibration (Z) à partir de l'armature extérieure (4), ce bossage (24) étant adapté pour buter contre une contrebutée solidaire du premier élément rigide afin de limiter le déplacement de l'armature intérieure (1) dans la direction de vibration (Z) selon un deuxième sens (30) opposé audit premier sens (31);
- et un élément d'interconnexion rigide (10) comportant un rebord annulaire intérieur (15) qui délimite un orifice traversant (13) dans lequel l'armature extérieure (4) est engagée, l'armature extérieure (4) étant placée en appui contre ledit rebord annulaire (15) dans le premier sens (31) de la direction de vibration (Z), le rebord annulaire (15) présentant une première face axiale orientée dans le premier sens (31), et ledit élément d'interconnexion (10) comportant des moyens de liaison destinés à être fixés au deuxième élément rigide,
**caractérisé en ce que** l'armature extérieure (4) comporte une partie centrale (18) qui est en appui contre ledit rebord annulaire (15) dans au moins une direction sensiblement radiale, et au moins une patte (21) qui est pliée vers l'extérieur par rapport à ladite partie centrale (18) de l'armature extérieure (4) et qui est solidaire dudit bossage (24), ladite patte pliée (21) et ledit bossage (24) s'étendant en regard de ladite première face axiale du rebord annulaire (15), et au moins ladite patte (21) étant en appui contre ladite première face axiale pour solidariser rigidement l'armature extérieure (4) avec l'élément d'interconnexion (10).

2. Support antivibratoire selon la revendication 1, dans lequel chaque bossage (24) du premier groupe est solidarisé avec la patte correspondante (21) de l'armature extérieure (4) par une paroi mince (22) en élastomère moulée d'une seule pièce avec le corps en élastomère (5), ladite paroi mince (22) étant solidarisée en partie avec la patte (21) et avec le bossage (24) correspondants.

3. Support antivibratoire selon les revendications 1 et 2, dans lequel chaque bossage (24) du premier groupe se présente sous la forme d'une languette épaisse en élastomère qui est reliée au reste du corps en élastomère (5) par une partie amincie flexible (24a), de façon que ladite languette puisse pivoter dans la direction radiale, et la paroi mince en élastomère (22) est reliée à ladite languette en au moins un point éloigné de ladite partie amincie (24a).

4. Support antivibratoire selon l'une quelconque des revendications précédentes, dans lequel chaque bossage (24) du premier groupe comporte des moyens de clipsage (27) propres à coopérer avec des moyens de clipsage complémentaires (17a) solidaires du rebord annulaire (15) de l'élément d'interconnexion (10) pour maintenir le bossage (24) sous ledit rebord annulaire (15).

5. Support antivibratoire selon l'une quelconque des revendications précédentes, dans lequel le rebord annulaire (15) de l'élément d'interconnexion (10) présente une deuxième face axiale qui est opposée à la première face axiale et qui est recouverte par l'armature extérieure (4), l'armature extérieure (4) étant en appui direct et rigide contre ladite deuxième face et chaque patte pliée (21) de l'armature extérieure (4) étant en appui direct et rigide contre la première face axiale du rebord annulaire (15) de l'élément d'interconnexion (10), tandis que la partie centrale (18) de l'armature extérieure (4) est en contact périphérique direct et rigide contre ledit rebord (15) dans la direction radiale.

6. Support antivibratoire selon l'une quelconque des revendications précédentes, dans lequel l'armature extérieure (4) est constituée par une tôle pliée et découpée et est munie, à une première extrémité opposée au premier élément rigide, d'un bord périphérique externe (19), et, à une deuxième extrémité opposée à ladite première extrémité, d'au moins deux pattes (21) qui sont venues de matière avec ladite armature extérieure (4), qui sont sensiblement diamétralement opposées, et qui sont respectivement solidaires de deux bossages (24) par des moyens de liaison, ces bossages (24) étant eux-mêmes diamétralement opposés par rapport à l'armature extérieure (4).

7. Support antivibratoire selon l'une quelconque des revendications précédentes, dans lequel le corps en élastomère (5) comporte un deuxième groupe de bossages comprenant au moins un bossage (28), chaque bossage du deuxième groupe s'étendant dans ledit premier sens (31) de la direction de vibration (Z) à partir de l'armature intérieure (1), ce bossage du deuxième groupe étant adapté pour buter contre l'armature extérieure (4) afin de limiter le déplacement de l'armature intérieure (1) dans ledit premier sens (31).

8. Support antivibratoire selon l'une quelconque des revendications précédentes, dans lequel le corps en élastomère (5) comporte un troisième groupe de bossages comprenant au moins un bossage (29), chaque bossage du troisième groupe s'étendant dans un premier sens selon une direction sensiblement radiale depuis l'armature intérieure (1), l'élément d'interconnexion (10) présentant une contrebutée (14) qui est située au niveau dudit bossage (29) du troisième groupe et qui est adaptée pour coopérer avec ce dernier, afin de limiter le déplacement latéral de l'armature intérieure (1) vers ledit élément d'interconnexion (10).

9. Procédé de fabrication d'un support antivibratoire destiné à être interposé entre des premier et deuxième éléments rigides pour amortir des vibrations entre ces deux éléments, selon au moins une direction de vibration (Z), ce support comportant :
- deux armatures rigides respectivement intérieure (1) et extérieure (4), adaptées pour être reliées respectivement avec les premier et deuxième éléments rigides à réunir, l'armature extérieure (4) présentant une forme annulaire sensiblement centrée sur un axe parallèle à ladite direction de vibration (Z) et entourant l'armature intérieure (1) ;
- un corps en élastomère (5) reliant entre elles les deux armatures rigides et comportant un premier groupe de bossages qui comprend au moins un bossage (24), ledit bossage (24) s'étendant dans un premier sens (31) selon la direction de vibration (Z) à partir de l'armature extérieure (4), ce bossage (24) étant adapté pour buter contre une contrebutée solidaire du premier élément rigide afin de limiter le déplacement de l'armature intérieure (1) dans la direction de vibration (Z) selon un deuxième sens (30) opposé audit premier sens (31);
- et un élément d'interconnexion rigide (10) comportant un rebord annulaire intérieur (15) qui délimite un orifice traversant (13) dans lequel l'armature extérieure (4) est engagée, l'armature extérieure (4) étant placée en appui contre ledit rebord annulaire (15) dans le premier sens (31) de la direction de vibration (Z), le rebord annulaire (15) présentant une première face axiale orientée dans le premier sens (31), et ledit élément d'interconnexion (10) comportant des moyens de liaison destinés à être fixés au deuxième élément rigide,
**caractérisé en ce que** l'armature extérieure (4) comporte une partie centrale (18) qui est en appui contre ledit rebord annulaire (15) dans au moins une direction sensiblement radiale, et au moins une patte (21) qui est pliée vers l'extérieur par rapport à ladite partie centrale (18) de l'armature extérieure (4) et qui est solidaire dudit bossage (24), ladite patte pliée (21) et ledit bossage (24) s'étendant en regard de ladite première face axiale du rebord annulaire (15), et au moins ladite patte (21) étant en appui contre ladite première face axiale pour solidariser rigidement l'armature extérieure (4) avec l'élément d'interconnexion (10), le procédé comprenant les étapes consistant à :
a) mouler le corps (5) en élastomère entre l'armature intérieure (1) et une ébauche d'armature extérieure dont chaque patte (21) s'étend sensiblement axialement dans le premier sens (31) de la direction de vibration (Z), ledit bossage (24) formant alors une languette flexible qui est solidaire de ladite patte (21) et le corps en élastomère (5) étant alors solidaire de l'armature intérieure (1) et de l'ébauche d'armature extérieure ;
b) emboîter l'ébauche d'armature extérieure dans l'orifice (13) de l'élément d'interconnexion (10) de façon à ce que la patte (21) de l'ébauche d'armature extérieure et ledit bossage (24) soient situés au-delà du rebord annulaire (15) de l'élément d'interconnexion (10) dans le premier sens (31) de la direction de vibration (Z);
c) et replier ladite patte de l'ébauche d'armature extérieure contre la première face axiale du rebord annulaire (15) de l'élément d'interconnexion (10) en formant ainsi l'armature extérieure (4), en entraînant simultanément le bossage (24) pour le positionner sous le rebord annulaire (15) de l'élément d'interconnexion (10).

## Patentansprüche

1. Schwingungsdämpfendes Lager zur Anordnung zwischen einem ersten und einem zweiten steifen Element, um Schwingungen zwischen diesen beiden Elementen gemäß zumindest einer Schwingungsrichtung (Z) zu dämpfen, wobei das Lager folgendes aufweist:
- zwei steife Beschläge, und zwar einen inneren (1) und einen äußeren (4), die dazu ausgestaltet sind, mit jeweils einem der beiden zu vereinigenden steifen Element verbunden zu werden, wobei der äußere Beschlag eine ringförmige Gestalt hat, die im Wesentlichen auf einer Achse zentriert ist, die parallel zu der besagten Schwingungsrichtung (Z) ist, und den inneren Beschlag (1) umgibt;
- einen Elastomerkörper (5), der die beiden steifen Beschläge untereinander verbindet und der eine erste Gruppe von Vorsprüngen mit zumindest einem Vorsprung (24) aufweist, welcher Vorsprung sich in einem ersten Sinn (31) gemäß der Schwingungsrichtung (Z) von dem äußeren Beschlag (4) aus erstreckt, wobei dieser Vorsprung (24) dazu ausgestaltet ist, gegen einen Anschlag anzustoßen, der mit dem ersten steifen Element verbunden ist, um die Verschiebung des inneren Beschlags (1) in der Schwingungsrichtung (Z) gemäß einem zweiten Sinn (30) zu begrenzen, der dem ersten Sinn (31) entgegengesetzt ist;
- und ein steifes Vereinigungselement (10), das eine innere ringförmige Rippe (15) aufweist, die eine Durchgangsöffnung (13) begrenzt, in welcher der äußere Beschlag (4) eingreift, wobei der äußere Beschlag (4) im ersten Sinn (31) der Schwingungsrichtung (Z) gegen die ringförmige Rippe (15) anliegt, wobei die ringförmige Rippe (15) eine erste axiale Fläche aufweist, die in dem ersten Sinn (31) orientiert ist, und wobei das Vereinigungselement (10) Vereinigungsmittel aufweist, die dazu bestimmt sind, an dem zweiten steifen Element angebracht zu werden,
**dadurch gekennzeichnet, dass** der äußere Beschlag (4) einen mittleren Bereich (18) aufweist, der gegen die ringförmige Rippe (15) in zumindest einer im Wesentlichen radialen Richtung anliegt, und zumindest einen Fortsatz (21), der bezüglich des mittleren Bereichs (18) des äußeren Beschlags (4) nach außen geknickt und mit dem Vorsprung (24) verbunden ist, wobei sich der geknickte Fortsatz (21) und der Vorsprung (24) zu der ersten axialen Fläche der ringförmigen Rippe (15) hin weisend erstrecken, und wobei zumindest der Fortsatz (21) gegen die erste axiale Fläche anliegt, um den äußeren Beschlag (4) fest mit dem Vereinigungselement (10) zu vereinigen.

2. Schwingungsdämpfendes Lager gemäß Anspruch 1, bei welchem der Vorsprung (24) der ersten Gruppe mit dem dazugehörigen Fortsatz (21) des äußeren Beschlags (4) über eine schmale Wand (22) aus Elastomer verbunden ist, die einstückig mit dem Elastomerkörper (5) ausgeformt ist, wobei die schmale Wand (22) teilweise mit dem entsprechenden Fortsatz (21) und mit dem entsprechenden Vorsprung (24) verbunden ist.

3. Schwingungsdämpfendes Lager gemäß den Ansprüchen 1 und 2, bei welchem jeder Vorsprung (24) der ersten Gruppe die Form einer dicken Zunge aus Elastomer hat, die mit dem Rest des Elastomerkörpers (5) über einen verdünnten flexiblen Bereich (24a) verbunden ist, und zwar so, dass die Zunge in der radialen Richtung schwenken kann, und wobei die schmale Wand aus Elastomer (22) mit der Zunge in zumindest einem Punkt verbunden ist, der von dem verdünnten Bereich (24a) beabstandet ist.

4. Schwingungsdämpfendes Lager gemäß einem der vorangehenden Ansprüche, bei welchem jeder Vorsprung (24) der ersten Gruppe Clip-Mittel (27) aufweist, die dazu geeignet sind, mit komplementären Clip-Mitteln (17a) zusammenzuwirken, die mit der ringförmigen Rippe (15) des Vereinigungselements (10) verbunden sind, um den Vorsprung (24) unter der ringförmigen Rippe (15) zu halten.

5. Schwingungsdämpfendes Lager gemäß einem der vorangehenden Ansprüche, bei welchem die ringförmige Rippe (15) des Vereinigungselements (10) eine zweite axiale Fläche hat, die der ersten axialen Fläche gegenüberliegt und die von dem äußeren Beschlag (4) bedeckt ist, wobei der äußere Beschlag (4) direkt und fest gegen die zweite Fläche anliegt und wobei jeder geknickte Fortsatz (21) des äußeren Beschlags (4) direkt und fest gegen die erste axiale Fläche der ringförmigen Rippe (15) des Vereinigungselements (10) anliegt, während der mittlere Bereich (18) des äußeren Beschlags (4) in radialer Richtung in direktem und festem Umfangskontakt gegen die Rippe (15) steht.

6. Schwingungsdämpfendes Lager gemäß einem der vorangehenden Ansprüche, bei welchem der äußere Beschlag (4) durch ein geknicktes und geschnittenes Blech gebildet wird und an einem ersten Ende, das dem ersten steifen Element gegenüberliegt, mit einer äußeren Umfangskante (19) versehen ist und an einem zweiten Ende, das dem ersten Ende gegenüberliegt, mit zumindest zwei Fortsätzen (21), die einstückig mit dem äußeren Beschlag (4) ausgebildet sind und die sich im Wesentlichen diametral gegenüberliegen und die jeweils mit einem der beiden Vorsprünge (24) über Vereinigungsmittel verbunden sind, wobei diese Vorsprünge (24) einander ihrerseits bezüglich des äußeren Beschlags (4) diametral gegenüberliegen.

7. Schwingungsdämpfendes Lager gemäß einem der vorangehenden Ansprüche, bei welchem der Elastomerkörper (5) eine zweite Gruppe von Vorsprüngen mit zumindest einem Vorsprung (28) beinhaltet, wobei jeder Vorsprung der zweiten Gruppe sich in dem ersten Sinn (31) der Schwingungsrichtung (Z) von dem inneren Beschlag (1) aus erstreckt, wobei dieser Vorsprung der zweiten Gruppe dazu ausgestaltet ist, gegen den äußeren Beschlag (4) anzuschlagen, um die Verschiebung des inneren Beschlags (1) in dem besagten ersten Sinn (31) zu beschränken.

8. Schwingungsdämpfendes Lager gemäß einem der vorangehenden Ansprüche, bei welchem der Elastomerkörper (5) eine dritte Gruppe von Vorsprüngen mit zumindest einem Vorsprung (29) aufweist, wobei jeder Vorsprung der dritten Gruppe sich in einem ersten Sinn gemäß einer im Wesentlichen radialen Richtung von dem inneren Beschlag (1) aus erstreckt, wobei das Vereinigungselement (10) einen Anschlag (14) aufweist, der sich auf dem Niveau des Vorsprungs (29) der dritten Gruppe befindet und dazu ausgestaltet ist, mit letzterem zusammenzuwirken, um die seitliche Verschiebung des inneren Beschlags (1) in Richtung des Vereinigungselements (10) zu beschränken.

9. Verfahren zur Herstellung eines schwingungsdämpfenden Lagers, das dazu bestimmt ist, zwischen einem ersten und einem zweiten steifen Element angeordnet zu werden, um Schwingungen zwischen diesen beiden Elementen gemäß zumindest einer Schwingungsrichtung (Z)zu dämpfen, wobei das Lager folgendes aufweist:
- zwei steife Beschläge, und zwar einen inneren (1) und einen äußeren (4), die dazu ausgestaltet sind, mit jeweils einem der beiden zu vereinigenden steifen Elemente verbunden zu werden, wobei der äußere Beschlag (4) eine ringförmige Gestalt hat, die im Wesentlichen zentriert auf einer Achse ist, die parallel zu der besagten Schwingungsrichtung (Z) ist, und den inneren Beschlag (1) umgibt;
- einen Elastomerkörper (5), der die beiden steifen Beschläge untereinander verbindet und der eine erste Gruppe von Vorsprüngen mit zumindest einem Vorsprung (24) aufweist, welcher Vorsprung (24) sich in einem ersten Sinn (31) gemäß der Schwingungsrichtung (Z) von dem äußeren Beschlag (4) aus erstreckt, wobei dieser Vorsprung (24) dazu ausgestaltet ist, gegen einen Anschlag anzustoßen, der mit dem ersten steifen Element verbunden ist, um die Verschiebung des inneren Beschlags (1) in der Schwingungsrichtung (Z) gemäß einem zweiten Sinn (30) zu begrenzen, der dem ersten Sinn (31) entgegengesetzt ist;
- und ein steifes Vereinigungselement (10), das eine innere ringförmige Rippe (15) aufweist, die eine Durchgangsöffnung (13) begrenzt, in welcher der äußere Beschlag (4) im Eingriff ist, wobei der äußere Beschlag (4) im ersten Sinn (31) der Schwingungsrichtung (Z) gegen die ringförmige Rippe (15) anliegt, wobei die ringförmige Rippe (15) eine erste axiale Fläche aufweist, die in dem ersten Sinn (31) orientiert ist, und wobei das Vereinigungselement (10) Vereinigungsmittel aufweist, die dazu bestimmt sind, an dem zweiten steifen Element angebracht zu werden,
**dadurch gekennzeichnet, dass** der äußere Beschlag (4) einen mittleren Bereich (18) aufweist, der gegen die ringförmige Rippe (15) in zumindest einer im Wesentlichen radialen Richtung anliegt, und zumindest einen Fortsatz (21), der bezüglich des mittleren Bereichs (18) des äußeren Beschlags (4) nach außen geknickt ist und mit dem Vorsprung (24) verbunden ist, wobei sich der geknickte Fortsatz (21) und der Vorsprung (24) zu der ersten axialen Fläche der ringförmigen Rippe (15) hin weisend erstrecken, und wobei zumindest der Fortsatz (21) gegen die erste axiale Fläche anliegt, um den äußeren Beschlag (4) fest mit dem Vereinigungselement (10) zu vereinigen, wobei das Verfahren die folgenden Schritte aufweist:
a) Ausformen des Elastomerkörpers (5) zwischen dem inneren Beschlag (1) und einem Vorprodukt des äußeren Beschlags, bei welchem sich jeder Fortsatz (21) im Wesentlichen axial in dem ersten Sinn (31) der Schwingungsrichtung (Z) erstreckt, so dass der Vorsprung (24) eine flexible Zunge bildet, die mit dem Fortsatz (21) verbunden ist, so dass der Elastomerkörper (5) daher mit dem inneren Beschlag (1) und dem Vorprodukt des äußeren Beschlags verbunden ist;
b) Einpassen des Vorprodukts des äußeren Beschlags in die Öffnung (13) des Vereinigungselements (10), so dass der Fortsatz (21) des Vorprodukts des äußeren Beschlags und der Vorsprung (24) sich jenseits der ringförmigen Rippe (15) des Vereinigungselements (10) in dem ersten Sinn (31) der Schwingungsrichtung (Z) befinden; und
c) Zurückfalten des Fortsatzes des Vorprodukts des äußeren Beschlags gegen die erste axiale Fläche der ringförmigen Rippe (15) des Vereinigungselements (10), wodurch der äußere Beschlag (4) ausgeformt wird, wobei gleichzeitig der Vorsprung (24) mitgenommen wird, um ihn unter der ringförmigen Rippe (15) des Vereinigungselements (10) zu positionieren.

## Claims

1. Anti-vibration support intended to be disposed between first and second rigid elements in order to dampen vibrations between these two elements according to at least one vibration direction (Z), this support having:
- two rigid armatures, interior (1) and exterior (4) respectively, adapted to be respectively connected to the first and second rigid elements to be connected, the exterior armature having an annular form essentially centred on an axis in parallel with said vibration direction (Z) and surrounding the interior armature (1);
- an elastomer body (5) connecting the two rigid armatures to each other and having a first group of bosses which includes at least one boss (24), said boss extending in a first direction (31) according to the vibration direction (Z) from the exterior armature (4), this boss (24) being adapted to abut against a counter-abutment fixedly attached to the first rigid element in order to limit the movement of the interior armature (1) in the vibration direction (Z) according to a second direction (30) opposite said first direction (31);
- and a rigid interconnection element (10) having an interior annular edge (15) which delimits a through aperture (13) in which the exterior armature (4) is engaged, the exterior armature (4) being placed in abutment against said annular edge (15) in the first direction (31) of the vibration direction (Z), the annular edge (15) having a first axial surface orientated in the first direction (31), and said interconnection element (10) having connecting means intended to be fixed to the second rigid element,
**characterised in that** the exterior armature (4) has a central part (18) which is in abutment against said annular edge (15) in at least one essentially radial direction, and at least one tab (21) which is bent towards the exterior with regard to said central part (18) of the exterior armature (4) and which is fixedly attached to said boss (24), said bent tab (21) and said boss (24) extending facing said first axial surface of the annular edge (15), and at least said tab (21) being in abutment against said first axial surface in order to fixedly attach the exterior armature (4) to the interconnection element (10).

2. Anti-vibration support as claimed in Claim 1, wherein each boss (24) of the first group is fixedly attached to the corresponding tab (21) of the exterior armature (4) by a thin elastomer wall (22) moulded from a single piece with the elastomer body (5), said thin wall (22) being partly fixedly attached to the corresponding tab (21) and boss (24).

3. Anti-vibration support as claimed in Claims 1 and 2, wherein each boss (24) of the first group has the form of a thick elastomer tongue which is connected to the rest of the elastomer body (5) by a flexible thin part (24a) in such a manner that said tongue can pivot in the radial direction, and the thin elastomer wall (22) is connected to said tongue at at least one site remote from said thin part (24a).

4. Anti-vibration support as claimed in any one of the preceding Claims, wherein each boss (24) of the first group has clipping means (27) intended to co-operate with the complementary clipping means (17a) fixedly attached to the annular edge (15) of the interconnection element (10) in order to keep the boss (24) under said annular edge (15).

5. Anti-vibration support as claimed in any one of the preceding Claims, wherein the annular edge (15) of the interconnection element (10) has a second axial surface which is opposite the first axial surface and which is covered by the exterior armature (4), the exterior armature (4) being in direct and rigid abutment against said second surface and each bent tab (21) of the exterior armature (4) being in direct and rigid abutment against the first axial surface of the annular edge (15) of the interconnection element (10), whilst the central part (18) of the exterior armature (4) is in direct and rigid peripheral contact with said edge (15) in the radial direction.

6. Anti-vibration support as claimed in any one of the preceding Claims, wherein the exterior armature (4) is formed by a bent and cut metal sheet and is provided, on a first end opposite the first rigid element, with an external peripheral edge (19) and, on a second end opposite said first end, with at least two tabs (21) which consist of a single piece with said exterior armature (4), which are essentially diametrically opposed and which are respectively fixedly attached to two bosses (24) by connection means, these bosses (24) themselves being diametrically opposed with regard to the exterior armature (4).

7. Anti-vibration support as claimed in any one of the preceding Claims, wherein the elastomer body (5) has a second group of bosses comprising at least one boss (28), each boss of the second group extending in said first direction (31) of the vibration direction (Z) from the interior armature (1), this boss of the second group being adapted to abut against the exterior armature (4) in order to limit the movement of the interior armature (1) in said first direction (31).

8. Anti-vibration support as claimed in any one of the preceding Claims, wherein the elastomer body (5) has a third group of bosses comprising at least one boss (29), each boss of the third group extending in a first direction according to an essentially radial direction from the interior armature (1), the interconnection element (10) having a counter-abutment (14) which is located at said boss (29) of the third group and which is adapted in order to co-operate with the latter in order to limit the lateral movement of the interior armature (1) towards said interconnection element (10).

9. Method of producing an anti-vibration support intended to be disposed between first and second rigid elements in order to dampen vibrations between these two elements according to at least one vibration direction (Z), this support having:
- two rigid armatures, interior (1) and exterior (4) respectively, adapted to be respectively connected to the first and second rigid elements to be connected, the exterior armature (4) having an annular form essentially centred on an axis in parallel with said vibration direction (Z) and surrounding the interior armature (1);
- an elastomer body (5) connecting the two rigid armatures to each other and having a first group of bosses which includes at least one boss (24), said boss (24) extending in a first direction (31) according to the vibration direction (Z) from the exterior armature (4), this boss (24) being adapted to abut against a counter-abutment fixedly attached to the first rigid element in order to limit the movement of the interior armature (1) in the vibration direction (Z) according to a second direction (30) opposite said first direction (31);
- and a rigid interconnection element (10) having an interior annular edge (15) which delimits a through aperture (13) in which the exterior armature (4) is engaged, the exterior armature (4) being placed in abutment against said annular edge (15) in the first direction (31) of the vibration direction (Z), the annular edge (15) having a first axial surface orientated in the first direction (31), and said interconnection element (10) having connecting means intended to be fixed to the second rigid element,
**characterised in that** the exterior armature (4) has a central part (18) which is in abutment against said annular edge (15) in at least one essentially radial direction, and at least one tab (21) which is bent towards the exterior with regard to said central part (18) of the exterior armature (4) and which is fixedly attached to said boss (24), said bent tab (21) and said boss (24) extending facing said first axial surface of the annular edge (15), and at least said tab (21) being in abutment against said first axial surface in order to fixedly attach the exterior armature (4) to the interconnection element (10), the method comprising the steps of:
a) moulding the elastomer body (5) between the interior armature (1) and a blank of the exterior armature of which each tab (21) extends essentially in an axial manner in the first direction (31) of the vibration direction (Z), said boss (24) thus forming a flexible tongue which is fixedly attached to said tab (21) and the elastomer body (5) thus being fixedly attached to the interior armature (1) and to the blank of the exterior armature;
b) inserting the blank of the exterior armature in the aperture (13) of the interconnection element (10) in a manner such that the tab (21) of the blank of the exterior armature and said boss (24) are located beyond the annular edge (15) of the interconnection element (10) in the first direction (31) of the vibration direction (Z);
c) and bending said tab of the blank of the exterior armature against the first axial surface of the annular edge (15) of the interconnection element (10) thus forming the exterior armature (4) by simultaneously moving the boss (24) in order to position it under the annular edge (15) of the interconnection element (10).
